# EUROPÄISCHE PATENTSCHRIFT

(11) **EP 3 108 051 B1**
(45) Veröffentlichungstag und Bekanntmachung des Hinweises auf die Patenterteilung: **31.10.2018**
(21) Anmeldenummer: 15700856.6
(22) Anmeldetag: 15.01.2015
(51) Int. Cl.: D04H 1/498, D04H 3/016, D04H 3/018, D04H 3/11

(54) **MIKROFASER-VERBUNDVLIESSTOFF**
MICROFIBER NONWOVEN COMPOSITE
TISSU NON-TISSÉ MICROFIBRE

(30) Priorität: 21.02.2014 DE 102014002232
(43) Veröffentlichungstag der Anmeldung: 28.12.2016
(60) Teilanmeldung: 18189165.6
(73) Patentinhaber: Carl Freudenberg KG, 69469 Weinheim (DE)
(72) Erfinder: GROTEN, Robert, 41844 Wegberg (DE); EISENHUT, Andreas, 82049 Pullach (DE); RIBOULET, Georges, F-68000 Colmar (FR); NEITHARDT, Wolfgang, 76709 Kronau (DE); DENGEL, Peter, 67659 Kaiserslautern (DE)
(86) Internationale Anmeldenummer: PCT/EP2015/050654
(87) Internationale Veröffentlichungsnummer: WO 2015/124334

(56) Entgegenhaltungen:
- EP-A1- 1 251 759
- EP-A1- 1 696 064
- EP-A2- 1 613 802
- WO-A1-01/48294
- WO-A1-92/08834
- WO-A1-2004/009347
- WO-A2-2006/102360
- WO-A2-2008/141687
- DE-A1- 19 903 903

## Beschreibung

### Technisches Gebiet

Textilphysikalische Eigenschaften von Flächenbahnen können über die chemischen und textilphysikalischen Eigenschaften der sie bildenden Fasern oder Filamente gesteuert werden. Dabei werden die Faser- oder Filamentrohstoffe nach den gewünschten chemischen oder physikalischen Eigenschaften ausgewählt, zum Beispiel hinsichtlich ihrer Einfärbbarkeit, chemischen Resistenz, ihrer Thermoformbarkeit, ihrer Schmutzaufnahme- oder ihres Adsorptionsvermögens. Die Modul- und Kraftdehnungs-Eigenschaften der Fasern oder Filamente sind u. a. von den Werkstoffeigenschaften abhängig, die durch die Wahl des Kristallisations- und/oder Orientierungsgrades und die Querschnitts-Geometrie gesteuert werden können, um die Biegesteifigkeit, die Kraftaufnahme oder die spezifischen Oberflächen der einzelnen Fasern oder Filamente zu beeinflussen. Die Summe der textilphysikalischen Eigenschaften der ein textiles Flächengebilde bildenden Fasern oder Filamente wird auch über das Flächengewicht gesteuert.

Für viele Anwendungszwecke müssen textile Flächengebilde einer Vielzahl von Anforderungen entsprechen, die oftmals schwer miteinander in Einklang zu bringen sind. So sollen beispielsweise Mikrofaservliesstoffe sowohl eine hohe Lebensdauer aufweisen als auch eine gute Handhabbarkeit, eine gute Reinigungseffizienz, eine gute Beständigkeit gegen mechanische Abnutzung und/oder einen bestimmten Wasserhaushalt bieten.

### Stand der Technik

Eine Möglichkeit verschiedene Eigenschaften in einem Flächengebilde zu vereinigen besteht darin, bei gewählter Art der Herstellung der Flächenware (zum Beispiel als Web- oder Strickware oder als Vliesstoff) verschiedene Faserarten miteinander zu kombinieren. So zeigen Gewebe, Gestricke oder Gewirke, welche dickere Fasern in Kombination mit Mikrofasern enthalten, eine gute Haltbarkeit sowie zumindest zu Beginn zufrieden stellende Gebrauchseigenschaften. Nachteilig an diesen Flächengebilden ist jedoch, dass sie in der Herstellung aufwändiger sind als Vliesstoffe. Dazu kommt, dass insbesondere Gestricke ein unzureichendes Rückhaltevermögen für Mikrofasern aufweisen. So wurde gefunden, dass nach etwa 400 Industriewaschzyklen (gemäß DIN EN ISO 155797) die Mikrofaseranteile nahezu vollständig entfernt sind. Dies spiegelt sich in einer deutlichen Verschlechterung der Gebrauchseigenschaften, wie Handhabbarkeit, Hautsensorik, Reinigungseffizienz beziehungsweise Wasserhaushalt wieder.

Vliesstoffe, die Mikrofasern enthalten, sind verglichen mit Geweben, Gestricken oder Gewirken deutlich einfacher herzustellen. Vliesstoffe sind Gebilde aus Fasern begrenzter Länge (Stapelfasern), Filamenten (Endlosfasern) oder geschnittenen Garnen jeglicher Art und jeglichen Ursprungs, die auf irgendeine Weise zu einem Vlies (einem Faserflor) zusammengefügt und auf irgendeine Weise miteinander verbunden worden sind. Mikrofaservliesstoffe weisen grundsätzlich hervorragende Eigenschaften bei der Entfernung von Schmutzen und bei Aufnahme und Abgabe von Flüssigkeiten, insbesondere von Wasser, auf. An den bekannten Mikrofaservliesstoffen ist jedoch nachteilig, dass ihre Haltbarkeit, insbesondere bei oftmaligem Waschen in Industriewaschzyklen, begrenzt ist, was sich beispielsweise in einer nach etwa 200 Industriewaschzyklen auftretenden Lochbildung in den Vliesstoffen widerspiegelt.

Durch ein Erhöhen des Anteils an dickeren Fasern kann die Haltbarkeit der Vliesstoffe theoretisch verbessert werden, da die chemische und mechanische Stabilität der Einzelfasern, bzw. -filamente mit deren Dicke zunimmt. Dies geht jedoch auf Kosten der Gebrauchseigenschaften.

Eine Erhöhung des Anteils an dünnen Fasern führt erwartungsgemäß zu einer Verbesserung der Gebrauchseigenschaften, unter anderem durch eine verbesserte Wasseraufnahmen durch Erzeugen einer höheren Anzahl an Kapilar-Zwischenräumen und durch einen weicheren Griff durch die reduzierte Biegesteifigkeit der Einzelfaser. Derartige Flächengebilde erweisen sich jedoch als fragil, wenn man Weiterreißkraft, Pilling und vor allem Waschbarkeit, insbesondere Kochwaschbarkeit, mit herkömmlichen Textilien vergleicht. Vor allem die den Mikrofasern zuzuschreibenden Gebrauchseigenschaften verschlechtern sich deutlich mit der Zeit.

So wurde für einen PIE 16 Vliesstoff (70 % PET 0,2 dtex; 30 % PA6 0,1 dtex, gesplittet und wasserstrahlverfestigt) in einem Stresstest von 400 Waschzyklen nach DIN EN ISO 155797 gefunden, dass sich das Flächengewicht deutlich verringert hatte. Eine genauere Analyse ergab, dass der Polyamidanteil von ursprünglich 30 auf bis zu 10 Gewichtsprozent gesunken war während sich der PET-Anteil weniger stark reduzierte. Dieses Resultat war insofern überraschend, als bekanntermaßen PET von Basen, wie Waschlaugen, angegriffen wird, Polyamid jedoch nicht. Erklärbar ist das Ergebnis dadurch, dass die feineren Polyamid-Filamente im Mikrofilamentvliesstoff eher dem chemischen und mechanischen Stress in der Wäsche, sowie der hohen mechanischen Friktion beim Trocknen in Trommeln unterliegen und im Laufe der Zeit als Faserbruch abtransportiert werden. Dies könnte auch durch die geringere Faserdicke gegenüber Polyester bedingt sein.

Die Absenkung des Anteils an PA6 nach jeweils 500 Wäschen ist in der nachfolgenden Tabelle illustriert. Der Polyamidrestgehalt wurde dabei durch herauslösen mit Ameisensäure bestimmt. Die Einzelmuster zeigen dabei die Streuung der PA6-Abnahme.

**Tabelle 1: Absenkung des PA6-Anteils nach 500 Wäschen (60°C) von ursprünglich 30% auf:**

| **N°** | **Brutto** | **korr; 0,073** | - **PET gewogen** | **korr; 0,071** | - **ergibt PA6** | **Gehalt PA6** |
|---|---|---|---|---|---|---|
| | g | G | g | g | g | % |
| 1 | 1,475 | 1,402 | 1,26 | 1,189 | 0,213 | 15,19 |
| 2 | 0,673 | 0,6 | 0,593 | 0,522 | 0,078 | 13,00 |
| 3 | 0,97 | 0,897 | 0,855 | 0,784 | 0,113 | 12,60 |
| 4 | 1,567 | 1,494 | 1,36 | 1,289 | 0,205 | 13,72 |
| 5 | 1,605 | 1,532 | 1,442 | 1,371 | 0,161 | 10,51 |
| 6 | 1,301 | 1,228 | 1,173 | 1,102 | 0,126 | 10,26 |

In Ableitung von diesen Erfahrungen war zu erwarten, dass das Einbringen von doppelt so dicken Segmenten von PIE 8 bei gegebenem Titer von PIE 16 die mechanischen Eigenschaften und Dauerhaftigkeit verbessert werden, und das Zufügen von halb so dicken Segmenten, kommend aus PIE 32, zu einem Ausgleich an verlorenen Eigenschaften, wie Komfort und Feuchtemanagement führt.

Ein weiterer Weg, regelrecht gegensätzliche Eigenschaften miteinander in einem Flächengebilde zu vereinigen, besteht in der Herstellung von Kompositen aus zwei oder mehr Flächengebilden. Hierzu können die einzelnen Flächengebilde separat hergestellt und anschließend durch bekannte Fügeverfahren, wie Nähen, Kleben, Laminieren, miteinander verbunden werden.

Ebenfalls bekannt sind Mehrkomponenten-Spinnvliesstoffe, die einen Titergradienten aufweisen. So beschreibt die EP 1 619 283 A1 Mehrkomponenten-Spinnvliesstoffe, bestehend aus mindestens zwei zueinander Grenzflächen ausbildenden Polymeren, die mindestens einer Spinnvorrichtung mit einheitlichen Spinndüsenöffnungen entstammen und die hydrodynamisch verstreckt, flächenförmig abgelegt sowie entweder als Einzellagen oder als Mehrkomponenten-Verbund gemeinsam verfestigt sind.

Der Erfindung hier liegt die Aufgabe zu Grunde die bekannten Mikrofaservliesstoffe dahingehend weiterzubilden, dass sie gute mechanische Eigenschaften, insbesondere eine gute Dauerwaschbeständigkeit mit guten Gebrauchseigenschaften, einen guten thermophysiologischen Komfort, angenehme Hautsensorik und Optik, gutes Wassermanagement (Absorption und Wasserabgabe, bevorzugt gleichmäßig) sowie eine gute Reinigungseffizienz bieten.

EP 1696064 beschreibt flüssigkeitsimprägnierte Flächengebilde umfassend eine Kombination von Splitfasern und/oder Meltblown-Fasern mit herkömmlichen Fasern aus thermoplastischen Polymeren. Die Flächengebilde können einschichtig oder mehrschichtig ausgebildet sein, wobei Splitfaservliesstoffe auf den Außenseiten der mehrschichtigen Flächengebilde vorliegen können. Die Flächengebilde können als Reinigungstücher eingesetzt werden.

### Darstellung der Erfindung

Die Erfindung betrifft einen Mikrofaser-Verbundvliesstoff umfassend eine erste und eine zweite Faserkomponente, die in Form alternierender Lagen angeordnet sind, wobei
- mindestens eine erste Lage A die erste Faserkomponente in Form schmelzgesponnener und zu einem Vlies abgelegter Verbundfilamente umfasst, die zumindest teilweise zu Elementar-Filamenten mit einem mittleren Titer von weniger als 0,1 dtex, vorzugsweise zwischen 0,03 dtex und 0,06 dtex gesplittet und verfestigt sind,
- mindestens eine Lage B auf der ersten Lage A angeordnet ist, wobei die Lage B die zweite Faserkomponente in Form von zu einem Vlies abgelegten und verfestigten Fasern mit einem mittleren Titer von 0,1 bis 3 dtex umfasst,
- mindestens eine zweite Lage A auf der Lage B angeordnet ist und wobei der Mikrofaser-Verbundvliesstoff folgenden Schichtaufbau A(BA)ₙBA, mit n = 1 bis 20 aufweist.

Die Erfindung betrifft weiterhin ein Verfahren zur Herstellung eines solchen Mikrofaser-Verbundvliesstoffs sowie die Verwendung der danach erhaltenen Produkte.

Der erfindungsgemäße Mikrofaser-Verbundvliesstoff zeichnet sich dadurch aus, dass er extrem feine Mikrofilamente in synergistischer Kombination mit gröberen Fasern enthält. Dabei liegen die beiden Faserkomponenten zumindest anteilig in Lagen vor, die in Bezug auf den Querschnitt des Mikrofaser-Verbundvliesstoffs zumindest bereichsweise alternierend angeordnet sind.

Erfindungsgemäß wurde gefunden, dass durch die spezielle Kombination der Lagen aus feinen und groben Fasern in einer alternierenden Anordnung die mechanischen Eigenschaften und die Haltbarkeit deutlich verbessert werden kann. So zeigt der erfindungsgemäße Mikrofaser-Verbundvliesstoff eine hervorragende Dauerwaschbeständigkeit, insbesondere bei stark beanspruchenden Industrieheißwaschzyklen. Darüber hinaus bietet der Vliesstoff trotz des Anteils an gröberen Fasern zufrieden stellende Gebrauchseigenschaften wie einen guten thermophysiologischen Komfort, eine angenehme Hautsensorik und Optik, gutes Wassermanagement sowie eine gute Reinigungseffizienz.

Dieses Ergebnis war insofern überraschend, als zu erwarten war, dass die Verwendung von Filamenten mit einem kleineren Filamenttiter zwar zu einer Verbesserung der Gebrauchseigenschaften führt, jedoch die Resistenz, und dabei insbesondere auch die Haltbarkeit des Vliesstoffs schlechter wird.

Ohne sich auf einen Mechanismus festzulegen wird vermutet, dass die gute mechanische Festigkeit im Bezug auf Pilling, Abrasion und Waschbeständigkeit des erfindungsgemäßen Vliesstoffs durch die hohe Verschlingung der feinen Filamente bei ihrer Herstellung, d.h. beim Splitten bzw. beim Verfestigungsprozess, beispielsweise beim Vernadeln und/oder Wasserstrahlverfestigen der Verbundelemente, erzielt wird.

Gemäß einer bevorzugten Ausführungsform der Erfindung sind die Filamente der ersten Faserkomponente lagenübergreifend zumindest teilweise mit den Fasern der zweiten Faserkomponente verschlungen ("Tentakeleffekt"). Dieser Effekt kann beispielsweise dadurch erzielt werden, dass zunächst ein Lagenverbund ABA oder auch größere Lagenverbunde, beispielsweise ein Lagenverbund ABABA aus zunächst noch unverfestigten bzw. lediglich vorverfestigten Vliesen der ersten und zweiten Faserkomponenten gebildet wird und anschließend ein Splittungs- bzw. Verfestigungsschritt für den gesamten Lagenverbund durchgeführt wird.

Bei dieser Vorgehensweise werden die beim Splitten erhaltenen feinen Filamente der ersten Faserkomponente in Z-Richtung, d.h. in Richtung des Querschnitts des Vliesstoffs, verteilt. Diese Verteilung kann mehrere Lagen umfassen und führt zu einer besonders intensiven Verbindung der einzelnen Lagen. Praktische Versuche haben ergeben, dass die Elementarfilamente umso weiter in die anderen Lagen transportiert werden je feiner sie sind.

Erfindungsgemäß weist die erste Faserkomponente schmelzgesponnene und zu einem Vlies abgelegte Verbundfilamente auf. Unter dem Begriff Filamente werden erfindungsgemäß Fasern verstanden, die im Unterschied zu Stapelfasern eine theoretisch unbegrenzte Länge haben. Verbundfilamente bestehen aus mindestens zwei Elementar-Filamenten und können durch gebräuchliche Splittverfahren, wie beispielsweise Wasserstrahlvernadeln, in Elementarfilamente gespalten und verfestigt werden. Die Verbundfilamente der ersten Faserkomponente sind erfindungsgemäß zumindest zum Teil in Elementarfilamente gespalten. Dabei beträgt der Splitgrad vorteilhafter Weise mehr als 80 % noch bevorzugter mehr als 90 % und insbesondere 100 %.

Um einen ausreichenden Stabilisierungseffekt zu erzielen ist es von Vorteil, wenn der Anteil der Elementarfilamente der ersten Faserkomponente, bezogen auf das Gesamtgewicht des Vliesstoffs und als Summenwert über alle Verbundlagen hinweg mindestens 20 Gew.-% beträgt. Praktische Versuche haben ergeben, dass eine besonders hohe Waschfestigkeit in Kombination mit guten Gebrauchseigenschaften erzeugt werden kann, wenn der Anteil dieser Elementarfilamente von 20 Gew.-% bis 60 Gew.-%, insbesondere von 30 Gew.-% bis 50 Gew.-%, bezogen auf das Gesamtgewicht des Vliesstoffs beträgt.

In Bezug auf die einzelnen Lagen des Vliesstoffs ist es von Vorteil, wenn der Anteil der Elementarfilamente der ersten Faserkomponente in der jeweiligen Lage A, beispielsweise in einer äußeren Lage A oder in einer innen liegenden Lage A von 80 Gew.% bis 100 Gew.%, vorzugsweise von 90 Gew.% bis 100 Gew.%, insbesondere 100 Gew.%, jeweils bezogen auf das Gesamtgewicht der Lage A, beträgt.

Im Hinblick auf die Dauergebrauchseigenschaften (Pilling, Abrasion und Waschbeständigkeit) ist es dabei von Vorteil, wenn mindestens eine äußere Lage vorteilhafter Weise aber beide äußeren Lagen des Vliesstoffs von den Lagen A gebildet werden.

Grundsätzlich ist denkbar, dass die jeweiligen Lagen A neben der ersten Faserkomponente noch weitere Fasern enthalten. Besonders gute Gebrauchseigenschaften werden jedoch überraschenderweise erhalten, wenn zumindest die äußeren Lagen A vollständig aus Elementarfilamenten der ersten Faserkomponente bestehen.

Vorteilhaft an der Verwendung von Verbundfilamenten als Ausgangsmaterial zur Herstellung der Elementarfilamente ist, dass der Titer der aus ihnen erzeugten Elementarfilamente auf einfache Weise durch Variation der Anzahl der in den Verbundfilamenten enthaltenen Elementarfilamente eingestellt werden kann. Hierbei kann der Titer der Verbundfilamente konstant bleiben, was prozesstechnisch von Vorteil ist. Weiter vorteilhaft an der Verwendung der Verbundfilamente ist, dass zusätzlich durch Variation des Splittgrads der Verbundfilamente auf einfache Weise das Verhältnis an dickeren und dünneren Filamenten im Vliesstoff gesteuert werden kann.

Praktische Versuche haben gezeigt, dass Vliesstoffe mit einer besonders hohen Waschfestigkeit in Kombination mit guten Gebrauchseigenschaften erhalten werden können, wenn der mittlere Titer der Elementarfilamente der ersten Faserkomponente zwischen 0,01-0,1 dtex, insbesondere von 0,03 dtex bis 0,06 dtex beträgt. Elementarfilamente mit diesem Titer können beispielsweise erhalten werden durch Splitten von Verbundfilamenten mit einem Titer von 0.02 bis 6,4 dtex, vorzugsweise von 0,06 bis 3,8 dtex.

Die Elementarfilamente können dabei im Querschnitt kreissegmentförmig, n-eckig, oder multilobal ausgebildet sein.

Vorzugsweise ist der erfindungsgemäße Mikrofaser-Verbundvliesstoff einer, bei dem die Verbundfilamente einen Querschnitt mit Orangenspalten-artiger oder auch "Pie" genannter Multisegment-Struktur aufweisen, wobei die Segmente verschiedene, alternierende, inkompatible Polymere, enthalten können. Ebenfalls geeignet sind Hollow-Pie Strukturen, die auch einen asymmetrisch axial verlaufenden Hohlraum aufweisen können. Pie-Strukturen, insbesondere Hollow-Pie Strukturen, können besonders leicht gesplitteten werden.

Im Hinblick auf die erste Faserkomponente weist die Orangenspalten- bzw. Kuchenstück-Anordnung (Pie-Anordnung) vorteilhafterweise 2, 4, 8, 16, 24, 32 oder 64 Segmente, besonders bevorzugt 16, 24 oder 32 Segmente, auf.

Der Anteil der ersten Faserkomponente im Vliesstoff beträgt vorzugsweise mindestens 40 Gew.-%, noch bevorzugter von 40 Gew.-% bis 60 Gew.-%, insbesondere von 45 Gew.-% bis 55 Gew.-%, jeweils bezogen auf das Gesamtgewicht des Vliesstoffs.

Um eine leichte Splittbarkeit zu erhalten ist es vorteilhaft, wenn die Verbundfilamente Filamente umfassen, die mindestens zwei thermoplastische Polymere enthalten. Vorzugsweise umfassen die Verbundfilamente mindestens zwei inkompatible Polymere. Unter inkompatiblen Polymeren sind solche Polymere zu verstehen, die in Kombination nicht, nur bedingt bzw. schwer klebende Paarungen ergeben. Ein solches Verbundfilament weist eine gute Spaltbarkeit in Elementarfilamente auf und bewirkt ein günstiges Verhältnis von Festigkeit zu Flächengewicht.

Als inkompatible Polymerpaare, werden vorzugsweise Polyolefine, Polyester, Polyamide und/oder Polyurethane in einer solchen Kombination eingesetzt, dass sich nicht, nur bedingt bzw. schwer klebende Paarungen ergeben.

Die verwendeten Polymerpaare werden besonders bevorzugt ausgewählt aus Polymerpaaren mit mindestens einem Polyolefin und/oder mindestens einem Polyamid, bevorzugt mit Polyethylen, wie Polypropylen/ Polyethylen, Polyamid6/ Polyethylen oder Polyethylenterepthalat/ Polyethylen, oder mit Polypropylen, wie Polypropylen/ Polyethylen, Polyamid6/ Polypropylen oder Polyethylenterepthalat/ Polypropylen.

Ganz besonders bevorzugt werden Polymerpaare mit mindestens einem Polyester und/oder mindestens einem Polyamid.

Polymerpaare mit zumindest einem Polyamid oder mit zumindest einem Polyethylenterephthalat werden wegen deren bedingter Klebbarkeit bevorzugt und Polymerpaare mit zumindest einem Polyolefin werden wegen deren schwerer Klebbarkeit besonders bevorzugt verwendet.

Als besonders bevorzugte Komponenten haben sich Polyester, vorzugsweise Polyethylenterephthalat, Polymilchsäure und/oder Polybutylenterephthalat einerseits, Polyamid, vorzugsweise Polyamid 6, Polyamid 66, Polyamid 46, andererseits ggf. in Kombination mit einem oder mehreren weiteren zu den oben genannten Komponenten inkompatiblen Polymeren, vorzugsweise ausgewählt aus Polyolefinen als besonders zweckmäßig erwiesen. Diese Kombination weist eine hervorragende Spaltbarkeit auf. Ganz besonders bevorzugt ist die Kombination aus Polyethylenterephthalat und Polyamid 6 oder aus Polyethylenterephthalat und Polyamid 66.

Der Anteil der zweiten Faserkomponente im Vliesstoff beträgt vorzugsweise mindestens 30 Gew.-%, vorzugsweise von 40 Gew.-% bis 60 Gew.-%, insbesondere von 45 Gew.-% bis 55 Gew.-%, jeweils bezogen auf das Gesamtgewicht des Vliesstoffs.

Denkbar ist, dass die jeweiligen Lagen B neben der zweiten Faserkomponente noch weitere Fasern enthalten. So enthalten die jeweiligen Lagen B vorteilhafter Weise neben der zweiten Faserkomponente Fasern der ersten Faserkomponente. Diese können, beispielsweise beim Verfestigen und/oder Splitten, aus den Lagen A in die Lage B eingebracht worden sein. Hierdurch kann eine höhere Verschlingung der Lagen und somit eine höheren Festigkeit erhalten werden.

Die Art der Fasern der zweiten Faserkomponente ist grundsätzlich unkritisch, sofern sie einen Titer von 0,1 bis 3 dtex aufweisen. So können die Fasern der zweiten Faserkomponente ausgewählt sein aus der Gruppe bestehend aus Filamenten, Stapelfasern, Fäden, und/oder Garnen. Hierbei sind unter Stapelfasern im Unterschied zu Filamenten, die eine theoretisch unbegrenzte Länge aufweisen, Fasern mit einer begrenzten Länge, vorzugsweise von 20 mm bis 60 mm zu verstehen.

Die Fasern der zweiten Faserkomponente können aus den verschiedensten Materialien bestehen. Geeignet sind insbesondere Polymere, hierbei vor allem Kunststoffe, insbesondere die oben bereits im Bezug auf die erste Faserkomponente diskutierten Kunststoffe aber auch natürliche Materialien.

Die Auswahl der Fasern der zweiten Faserkomponente richtet sich zweckmäßigerweise nach den jeweiligen Anwendungsbereichen, in denen der Vliesstoff eingesetzt werden soll. Als für viele Anwendungszwecke geeignet haben sich Filamente erwiesen. Diese können als Monokomponentenfilamente und/oder Verbundfilamente vorliegen.

Vorzugsweise liegen die Fasern der zweiten Faserkomponente, wie die Filamente der ersten Faserkomponente, zumindest anteilig als Verbundfilamente vor und sind zumindest teilweise in Elementarfilamente gesplittet. In diesem Fall weist zumindest ein Teil dieser Elementarfilamente einen Titer von 0,1 bis 3 dtex auf. Ganz besonders bevorzugt weisen sämtliche dieser Elementarfilamente diesen Titer auf. Derartige Elementarfilamente können durch Splittung von Verbundfilamenten mit einem Titer von 0,2 bis 24 dtex erhalten werden.

Vorteilhaft an der Verwendung der Verbundfilamente ist auch hier, dass der Titer der einzelnen Elementarfilamente auf einfache Weise durch Variation der Anzahl der in den Verbundfilamenten enthaltenen Elementarfilamente eingestellt werden kann. Dazu kommt, dass durch Variation des Splittgrades das Verhältnis zwischen dickeren und dünneren Filamenten im Vliesstoff gesteuert werden kann. Praktische Versuche haben ergeben, dass bei einer Einstellung des Splittgrads der Verbundfilamente auf mindestens 60 %, noch bevorzugter auf mindestens 70 %, noch bevorzugter auf 80 % bis 100 % besonders gute Pillingeigenschaften erhalten werden können.

Ein weiterer Vorteil besteht darin, dass in dieser Ausführungsform eine Verfestigung des Vliesstoffs vorzugsweise durch eine gemeinsame Splittung beider Verbundfilamentkomponenten, beispielsweise durch Wasserstrahlverfestigung, erfolgen kann. Diese Vorgehensweise erlaubt eine besonders intensive schichtübergreifende Verschlingung der bei der Splittung gebildeten Elementar-Filamente, so dass der erhaltene Verbundvliesstoff eine besonders gute Dauerhaltbarkeit besitzt.

Art und Struktur der Verbundfilamente können derjenigen entsprechen, die oben für die erste Faserkomponente diskutiert wurde. Vorzugsweise bestehen die Verbundfilamente der zweiten Faserkomponente aus 2, 4, 8, 16 Elementar-Filamenten und besonders bevorzugt aus 4 oder 8 Elementar-Filamenten.

Alternativ können die Fasern der zweiten Faserkomponente Monokomponenten-Filamente und/oder ein Gemisch von Verbundfilamenten mit Monokomponenten-Filamenten sein.

Erfindungsgemäß bevorzugt liegt der mittlere Titer der Filamente der ersten Faserkomponente deutlich unterhalb des mittleren Titers der Fasern der zweiten Faserkomponente. Praktische Versuche haben jedoch ergeben, dass es für die Einstellung von hoher Festigkeit und guten Gebrauchseigenschaften zweckmäßig ist, wenn die Fasern der zweiten Faserkomponente einen mittleren Titer aufweisen, der nicht mehr als das 30 fache, vorzugsweise nicht mehr als das Zehnfache des mittleren Titers der Filamente der ersten Faserkomponente beträgt.

Als besonders vorteilhaft hat sich erwiesen, wenn das Verhältnis des mittleren Filamenttiters der Filamente der zweiten Faserkomponente zu dem mittleren Filamenttiter der Filamente der ersten Faserkomponente von 6 bis 16, vorzugsweise von 8 bis 12, beträgt. Es hat sich gezeigt, dass Vliesstoffe mit einem solchen Verhältnis eine besonders hohe Delaminierungsresistenz aufweisen.

Wie bereits oben erläutert ist eine wesentliche Charakteristik des erfindungsgemäßen Vliesstoffs die alternierende Anordnung von Lagen aus Fasern mit großen und kleinen Fasertitern. Besonders bevorzugt ist eine Anordnung, in der die Faserlagen mit großem Titer von Filamenten aus den Faserlagen mit kleinem Titer zumindest teilweise durchdrungen werden ("Tentakeleffekt"). Hierdurch kann ein maximaler Schutz der innen liegenden groben Filamente, die aufgrund ihrer geringeren Verschlingung untereinander eine geringe Stabilität aufweisen, von außen liegenden feinen Filamenten, die aufgrund ihres hohen Verschlingungsgrades mit sich selbst und mit den groben Filamenten eine gute Stabilität aufweisen, erzielt werden. Gleichzeitig werden die außen liegenden feinen Filamente, die auf Grund der geringeren mechanischen Festigkeit und Steifigkeit an sich eine höhere Pilling-Neigung aufweisen (Fasern können durch mechanische Beanspruchung einfacher aus dem Verbund gelöst werden), besser im Gesamtverbund des Vliesstoffes verankert werden. Dies kann insbesondere durch den oben genannten "Tentakeleffekt" erfolgen, der sie besser in die angrenzenden Lagen mit Filamenten größeren Titers einbindet.

Vor diesem Hintergrund ist von Vorteil, wenn zumindest ein Teil der Oberfläche des Vliesstoffs von den Elementarfilamenten mit einem Titer von weniger als 0,1 dtex gebildet wird. Dementsprechend wird vorteilhafter Weise zumindest eine, vorzugsweise beide der Oberflächen des Vliesstoffs zumindest zu 50 %, vorzugsweise zu 60-100 % von den Elementar-Filamenten mit einem Titer von weniger als 0,1 dtex gebildet. Die Struktur und Zusammensetzung der Oberfläche kann beispielsweise mittels REM Aufnahmen bestimmt werden.

Die Vorsehung der feinen Filamente an der Außenseite des Vliesstoffs hat den Vorteil, dass innenliegende Fäden oder Filamente jedweder Art, aber insbesondere die groben Fasern der zweiten Faserkomponente mechanisch stabilisiert werden können. Gleichzeitig zeichnet sich die Oberfläche des Vliesstoffs durch vorteilhafte Gebrauchseigenschaften sowie durch einen vorteilhaften Aspekt und Griff aus.

Die Ausbildung der alternierenden Anordnung grober und feiner Fasern im erfindungsgemäßen Verbundvliesstoff kann beispielsweise dadurch erfolgen, dass Lagen, die Filamente der ersten Faserkomponente enthalten und Lagen, die Filamente der zweiten Faserkomponente enthalten, separat hergestellt und in der gewünschten Anordnung miteinander verbunden werden. Die Verbindung der Lagen kann dabei durch bekannte Fügeverfahren, wie Nähen, Kleben, Laminieren, und/oder mechanisches Vernadeln erfolgen, wobei die einzelnen Lagen gegebenenfalls verfestigt werden. Besonders einfach erfolgt die Verbindung der Lagen im Rahmen einer Wasserstrahlverfestigung der im Vliesstoff enthaltenen Verbundfilamente. Dabei können die Lagen vor der Verbindung auch separat vorverfestigt werden.

Vorzugsweise sind sowohl die Fasern der ersten als auch der zweiten Faserkomponente Verbundfilamente, die zumindest teilweise zu Elementar-Filamenten gesplittet sind. In diesem Fall erfolgt eine Verfestigung des Vliesstoffs vorzugsweise durch eine gemeinsame Splittung beider Verbundfilamentkomponenten. Dies kann beispielsweise dadurch erfolgen, dass zunächst ein Lagenverbund aus Vliesen der ersten und zweiten Faserkomponente gebildet wird und anschließend eine Verfestigung, beispielsweise mittels Wasserstrahlen, erfolgt. Diese Vorgehensweise erlaubt eine besonders intensive schichtübergreifende Verschlingung der bei der Splittung gebildeten Elementar-Filamente, so dass der erhaltene Verbundvliesstoff eine besonders gute Dauerhaltbarkeit besitzt.

Um einen hohen Verschlingungdgrad zu erhalten ist es zweckmäßig, wenn der Splittgrad, insbesondere der ersten Faserkomponente, möglichst hoch ist. Vor diesem Hintergrund beträgt der Anteil der jeweiligen Elementar-Filamente der ersten oder zweiten Faserkomponente in den Lagen vorteilhafter Weise mehr als 80 Gew. %, noch bevorzugter 85 bis 100 Gew. %.

In einer besonders bevorzugten Ausführungsform der Erfindung enthalten alle Lagen A zumindest teilweise gesplittete Pie 24-Filamente, Pie 32-Filamente und/oder Pie 64-Filamente. Denkbar ist ferner, dass sämtliche Lagen B zumindest teilweise gesplittete Pie 8-Filamente oder Pie 4-Filamente enthalten. Ebenfalls denkbar ist eine Anordnung, in der eine oder mehrere Lagen B Pie 8-Filamente enthalten und andere Lagen B Pie 16-Filamente und/oder Pie 4-Filamente.
Wie bereits oben erläutert hat es sich als besonders günstig erwiesen die Lagen so anzuordnen, dass sich die Lagen B, die die Fasern der zweiten Faserkomponente enthalten, im Inneren des Vliesstoffs befinden während die Lagen A, die die Filamente der ersten Faserkomponente enthalten, zumindest auf den Oberflächen des Vliesstoffs angeordnet sind. In dieser Anordnung können die außen liegenden Decklagen mit feinen Filamenten die innen liegenden Lagen überraschenderweise trotz ihrer feinen Titer und ihrer daraus resultierenden mechanischen Sensibilität effektiv schützen, was wie oben erläutert, zur Ausbildung eines besonders stabilen Schichtverbunds und guten Dauergebrauchseigenschaften führt.
Dieser Effekt lässt sich möglicherweise darauf zurückführen, dass die beim Splitten erhaltenen feinen Filamente beim Verfestigungschritt in Z-Richtung, d.h. in Richtung des Querschnitts des Vliesstoffs, verteilt werden. Diese Verteilung kann mehrere Lagen umfassen und führt zu einer besonders intensiven Verbindung der einzelnen Lagen. Praktische Versuche haben ergeben, dass die Elementarfilamente umso weiter in die angrenzenden Lagen hinein transportiert werden, je feiner sie sind.

Der erfindungsgemäße Vliesstoff enthält mindestens drei Lagen A, die Filamente der ersten Faserkomponente enthalten, sowie mindestens zwei Lagen B, die Filamente der zweiten Faserkomponente enthalten. Hierdurch wird die alternierende Basislagenfolge A-B-A erhalten. Wie bereits oben erläutert, kann durch die Einbindung der Lage B in das Innere des Schichtverbunds ein Verbundvliesstoff mit einer herausragenden Dauerbeständigkeit erhalten werden. Dadurch, dass die Außenseiten des Vliesstoffs durch die Lagen A gebildet werden, zeigt der Vliesstoff ferner sehr gute Gebrauchseigenschaften.

Die erfindungsgemäße Basislagenfolge A(BA)ₙBA kann durch weitere alternierende Lagen A und B erweitert werden. Erfindungsgemäß weist der Mikrofaser-Verbundvliesstoff folgenden Schichtaufbau A(BA)ₙBA, mit n = 1 bis 20 auf A(BA)ₙBA auf. Eine weitere bevorzugte Ausführungsform der Erfindung umfasst die Lagenfolgen: A(BA)ₙBA, mit n = 5 bis 15 und insbesondere von 8 bis 12. Beispiele für Lagenfolgen sind somit ABABABA, ABABABABA usw. Dabei ist denkbar, dass eine oder mehrere Lagen A mehrere Unter-Lagen A' und/oder eine oder mehrere Lagen B mehrere Unter-Lagen B' umfasst. Dabei kann der Titer der Fasern in den jeweiligen Unterlagen gleich sein oder voneinander abweichen. In einer Spinnanlage mit 15 Spinnpositionen wäre somit beispielsweise folgende Anordnung der Unter-Lagen A' und B' denkbar: A'A'B'B'B'A'B'B'B'A'B'B'B'A'A', was für den späteren Betrachter des Querschnitts ergibt A(BA)₂BA.

Gemäß einer bevorzugten Ausführungsform der Erfindung werden in den Lagenfolgen die äußeren Lagen jeweils von den Lagen A gebildet. Ferner zeichnen sich die Lagenfolgen vorteilhafter Weise durch eine alternierende Anordnung der Lagen A und B aus. Wie oben erläutert jedoch ist ebenfalls denkbar, dass die Lagenfolge weitere, von A und B verschiedene, Lagen aufweist.

Als ebenfalls vorteilhaft hat sich erwiesen die Lagenfolge der Lagen A und B, sowie der gegebenenfalls vorhandenen weiteren Lagen im Mikrofaser-Verbundvliesstoff so zu gestalten, dass sich ein symmetrischer Schichtaufbau ergibt. Diese Anordnung hat den Vorteil, dass ein besonders gleichmäßiges, seitensymmetrisches Eigenschaftsprofil erhalten werden kann.

Gemäß einer bevorzugten Ausführungsform der Erfindung weisen alle Lagen A und/oder B jeweils Fasern mit dem gleichen Fasertiter auf. Diese Ausführungsformen sind vorteilhaft, da sie eine besonders leichte Herstellung des Vliesstoffs ermöglichen. Gemäß einer alternativen bevorzugten Ausführungsform weisen jedoch verschiedene Lagen A (und/oder B) und/oder Unter-Lagen A' (und/oder B') Fasern mit verschiedenen Fasertitern auf. Hieran ist vorteilhaft, dass die Eigenschaften des Vliesstoffs sehr gezielt und seitenbezogen eingestellt werden können.

Der erfindungsgemäße Verbundvliesstoff kann auch weitere Lagen enthalten. Denkbar ist dabei, dass die weiteren Lagen als Verstärkungslagen, beispielsweise in Form eines Scrims ausgebildet sind und/oder dass sie Verstärkungsfilamente, Vliesstoffe, Gewebe, Gewirke und/oder Gelege umfassen. Bevorzugte Materialien zur Bildung der weiteren Lagen sind Kunststoffe, beispielsweise Polyester, und/oder Metalle. Dabei ist grundsätzlich denkbar, dass die weiteren Lagen die Außenlagen des Vliesstoffs bilden. Vorteilhafterweise sind die weiteren Lagen jedoch (gegebenenfalls zusätzlich) im Inneren des Vliesstoffs zwischen den Lagen A und B angeordnet.

Die zur Herstellung der Filamente des Verbundvliesstoffs eingesetzten Polymere können zumindest ein Additiv, ausgewählt aus der Gruppe bestehend aus Farbpigmenten, Antistatika, Antimikrobia wie Kupfer, Silber, Gold, oder Hydrophilierungs- oder Hydrophobierungs -Additive in einer Menge von 150 ppm bis 10 Gew.%, enthalten. Die Verwendung der genannten Additive in den eingesetzten Polymeren gestattet die Anpassung an kundenspezifische Anforderungen.

Die Flächengewichte des erfindungsgemäßen Verbundvliesstoffs werden in Abhängigkeit von dem gewünschten Anwendungszweck eingestellt. Als für viele Anwendungen zweckmäßig haben sich Flächengewichte, gemessen nach DIN EN 29073, im Bereich von 10 bis 500 g/m, vorzugsweise von 20 bis 300 g/m², und insbesondere von 30 bis 250 g/m erwiesen.

Wie oben erläutert zeichnet sich der erfindungsgemäße Mikrofaser-Verbundvliesstoff durch hervorragende mechanische Eigenschaften aus. So ist der erfindungsgemäße Mikrofaser-Verbundvliesstoff gemäß einer bevorzugten Ausführungsform der Erfindung gekennzeichnet durch eine hohe Haltbarkeit. So konnte festgestellt werden, dass beispielhafte erfindungsgemäße Vliesstoffe auch nach 850 Industriewaschzyklen gemäß DIN EN ISO 155797 keine Löcher aufweisen.

Vorteilhafterweise ist der Mikrofaser-Verbundvliesstoff ferner gekennzeichnet durch eine einfach einstellbare Weiterreisskraft gemäß DIN EN ISO 155797.

Desweiteren zeichnet sich der erfindungsgemäße Mikrofaser-Verbundvliesstoff durch einen gut einstellbaren Feuchtigkeitshaushalt aus.
Der erfindungsgemäße Mikrofaser-Verbundvliesstoff kann auf dem Fachmann bekannte Art und Weise hergestellt werden. Als besonders einfach hat sich ein Verfahren erwiesen, bei dem mindestens eine erste Faserlage umfassend Filamente der ersten Faserkomponente und mindestens eine zweite Faserlage umfassend Filamente der zweiten Faserkomponente hergestellt und miteinander verbunden werden.

Vorteilhafterweise wird das Verfahren zur Herstellung des erfindungsgemäßen Verbundvliesstoffs wie folgt durchgeführt:
Zunächst werden die einzelnen Faserlagen separat ersponnen, zu einem Vlies abgelegt und gegebenenfalls, beispielsweise durch Vernadelung, vorverfestigt. Anschließend werden die Faserlagen miteinander verbunden.

Insbesondere im Hinblick auf die Lagen B, welche wie oben dargelegt vorteilhafterweise im Inneren des Verbundvliesstoffs angeordnet werden, hat sich eine Vorverfestigung als zweckmäßig erwiesen, da hierdurch verhindert werden kann, dass Fasern der zweiten Faserkomponente an die Oberfläche des Verbundvliesstoffs gelangen.

Die Verbindung der einzelnen Lagen kann durch bekannte Fügeverfahren, wie Nähen, Kleben, Laminieren, Kalandrieren und/oder Nadeln herbeigeführt werden.

Besonders bevorzugt erfolgt die Verbindung der einzelnen Lagen jedoch dadurch, dass nach ihrer Herstellung alternierend Lagen mit Fasern der ersten Faserkomponente und Lagen mit Fasern der zweiten Faserkomponente aufeinander angeordnet werden und anschließend direkt beispielsweise mittels mechanischer Verfestigung und/oder Hydrofluidbehandlung verfestigt und gleichzeitig miteinander verbunden werden.

Durch eine Hydrofluidbehandlung kann der Verbundvliesstoff von außen nach innen verfestigt, gegebenenfalls gesplittet und innig mit den innen liegenden gröberen Filamenten verflochten werden. Diese Vorgehensweise ermöglicht eine besonders wirksame Verwendung der Filamente mit geringem Filamenttiter, da die feinen Filamente sehr tief in den Vliesstoff transportiert werden und dort offensichtlich aufgrund ihrer Verschlingung zu einer besonders effektiven Stabilisierung des Verbunds führen "Tentakel-Effekt".

Die Verfestigung und Splittung der Faserlagen erfolgt vorteilhafterweise dadurch, dass der gegebenenfalls vorverfestigte Vliesstoffverbund mindestens einmal auf jeder Seite mit Hochdruck-Fluidstrahlen, vorzugsweise mit Hochdruck-Wasserstrahlen beaufschlagt wird. Der erfindungsgemäße Verbundvliesstoff kann dadurch die Optik einer textilen Oberfläche erhalten und der Splittungsgrad der Verbundfilamente auf mehr als 80 % eingestellt werden.

Denkbar ist auch, dass die Fasern der ersten und zweiten Faserkomponente einem einheitlichen Spinn- und/oder Ablegeprozess entstammen, gleichzeitig erzeugt und gemeinsam abgelegt werden. Hierzu können mindestens zwei Spinnstellen mit jeweils einheitlichen Spinndüsenöffnungen vorgesehen sein, die Verbundfilamente mit unterschiedlicher Elementar-Filament-Anzahl oder ein Gemisch aus Verbundfilamenten mit Monokomponentenfilamente in einer gemeinsamen Spinn- und Verstreckvorrichtung erzeugen. Diese Filamente können anschließend zu dem erfindungsgemäßen Verbundvliesstoff abgelegt, sowie durch Hydrofluidbehandlung verfestigt und in die Elementarfilamente aufgespalten werden.

Damit wird der Vorteil erzielt, dass die Herstellung von Spinnvliesstoffen mit unterschiedlichen Filament-Titern nicht separat erfolgen muss und keine nachträgliche Vereinigung notwendig ist, um zu einem Mehrkomponenten-Spinnvliesstoff zu gelangen, der aus unterschiedlichen Filamenten mit unterschiedlichen Filament-Titern besteht.

Gemäß einer bevorzugten Ausführungsform der Erfindung sind mindestens drei, vorzugsweise mindestens 5, Reihen von Spinnköpfen mit jeweils einheitlichen Spinndüsenöffnungen vorgesehen, die Verbundfilamente mit unterschiedlicher Elementar-Filament-Anzahl oder ein Gemisch von Verbundfilamenten mit Monokomponenten-Filamenten in einer jeweils gemeinsamen Spinn- und Verstreckvorrichtung erzeugen. Alternativ kann auch mindestens eine Reihe mit entsprechend verschiedenen Spinndüsenöffnungen in einem Spinndüsenpaket (Vorhangspinnen) oder eine Vielzahl einzelner Spinndüsenpakete in einer so genannten traversierenden Ablage vorliegen.

Diese können anschließend zu einem Vlies abgelegt, sowie durch Hydrofluidbehandlung verfestigt und in die Elementarfilamente aufgespalten werden. Der Hydrofluidverfestigung kann ein mechanisches oder thermisches Vorverfestigungsverfahren vorgeschaltet sein. Gemäß dieser Ausführungsform können Verbundvliesstoffe erhalten werden, die aus Lagen mit einem unterschiedlichen Filament-Titer bestehen und die dadurch textilphysikalische Eigenschaften in sich vereinen, die sonst nur durch das Verbinden separat hergestellter Lagen erzielbar sind.

Vorteilhafter Weise wird das erfindungsgemäße Verfahren in der Weise weiter gebildet, dass die Reihenfolge der Spinnstellen in Bezug auf das Ablageband so gewählt wird, dass die oben beschriebenen Schichtstrukturen in einer Anordnung ABA, bzw. A(BA)ₙBA der Verbundlagen erhalten werden können.

Gemäß einer bevorzugten Ausführungsform der Erfindung wird die Reihenfolge der Spinnstellen im Bezug auf das Ablageband so gewählt, dass ein alternierender Titer der Filamente über die Dicke des Verbundvliesstoffs erzeugt wird.

Wie oben erläutert können die Verbundfilamente um die Trennung in die Elementarfilamente zu erleichtern, eine mittige Öffnung, insbesondere in Form eines rohrförmigen länglichen Hohlraums aufweisen, welcher in Bezug auf die Mittelachse der Verbundfilamente zentriert sein kann. Durch diese Anordnung lassen sich der enge Kontakt zwischen den Elementarfilamenten, welche durch die Innenwinkel der Spalten bzw. Kreisausschnitte gebildet werden, vor Trennung der Elementarfilamente, sowie der Kontakt in diesem Bereich von verschiedenen aus demselben Polymerstoff hergestellten Elementarfilamenten, verringern bzw. vermeiden.

Zur weiteren Verfestigung des Verbundvliesstoff-Gefüges können die Verbundfilamente eine latente oder spontane Kräuselung aufweisen, welche sich aus einem asymmetrischen Aufbau der Elementarfilamente in Bezug auf deren Längsmittelachse ergibt, wobei diese Kräuselung gegebenenfalls durch eine asymmetrische, geometrische Ausgestaltung des Querschnitts der Verbundfilamente aktiviert oder verstärkt wird. Hierdurch kann der Vliesstoff mit einer hohen Dicke, einem niedrigen Modul und/oder einer multiaxialen Elastizität ausgestattet werden.

In einer Variante können die Verbundfilamente eine latente oder spontane Kräuselung aufweisen, welche auf eine Differenzierung der physikalischen Eigenschaften der die Elementarfilamente bildenden Polymerstoffe bei den die Verbundfilamente betreffenden Spinn-, Kühlungs- und/oder Streckungsvorgängen zurückzuführen ist, die zu Verdrehungen führt, welche durch interne unsymmetrische Belastungen in Bezug auf die Längsmittelachse der Verbundfilamente verursacht werden, wobei die Kräuselung gegebenenfalls durch eine asymmetrische, geometrische Ausgestaltung des Querschnitts der Verbundfilamente aktiviert oder verstärkt wird.

Die Verbundfilamente können eine latente Kräuselung aufweisen, welche durch eine thermische, mechanische oder chemische Behandlung vor Bildung des Verbundvliesstoffes aktiviert wird.

Die Kräuselung kann durch eine zusätzliche Behandlung vor Verfestigung des Vliesstoffs beispielsweise thermisch oder chemisch verstärkt werden. Die Verfestigung des erfindungsgemäßen Vlieses findet vorzugsweise durch Behandlung mit Hochdruck-Fluidstrahlen statt. So können die Elementarfilamente während oder nach der Teilung der Verbundfilamente mit einem mechanischen, überwiegend senkrecht zur Stoffebene wirkenden Mittel (Vernadelung, flüssige Druckstrahlen) stark verwickelt werden.

Die Filamente, insbesondere die Verbundfilamente, können beispielsweise durch mechanische und/oder pneumatische Ablenkung abgelegt werden, wobei mindestens zwei von diesen Ablenkungsarten kombiniert werden können, sowie durch Schleudern auf ein Endlos-Laufband und mechanisch durch Vernadelung oder durch die Wirkung von flüssigen Druckstrahlen, welche mit festen (Mikro) Partikeln beaufschlagt sein können. Die Schritte der Verwickelung und Trennung der Verbundfilamente in Elementarfilamente können in ein und demselben Verfahrensschritt und mit ein und derselben Vorrichtung erfolgen, wobei die mehr oder weniger vollständige Trennung der Elementarfilamente mit einem zusätzlichen, mehr auf die Trennung gerichteten, Vorgang enden kann.

Die Festigkeit und der mechanische Widerstand des Verbundvliesstoffs können ferner deutlich erhöht werden, wenn vorgesehen ist, dass die Elementarfilamente untereinander durch eine Thermofusion gebunden werden, welche eines oder mehrere von ihnen betrifft, vorzugsweise durch Warmkalandrierung mit geheizten, glatten oder gravierten Walzen, durch Durchziehen durch einen Heißluft-Tunnelofen, durch Durchziehen auf eine von heißer Luft durchströmte Trommel und/oder durch Auftragen eines in einer Dispersion oder in einer Lösung enthaltenen oder pulverförmigen Bindemittels.

In einer Variante kann eine Verfestigung des Vlieses ebenfalls beispielsweise durch Warmkalandrierung vor jeglicher Trennung der einheitlichen Verbundfilamente in Elementarfilamente erfolgen, wobei die Trennung nach der Vliesverfestigung erfolgt.

Ferner kann das Vliesgefüge auch durch eine chemische Behandlung (wie sie beispielsweise in der französischen Patentschrift Nr. 2 546 536 der Anmelderin beschrieben ist) oder durch eine thermische Behandlung verfestigt werden, welche zu einer kontrollierten Schrumpfung, zumindest eines Teils der Elementarfilamente, nach deren gegebenenfalls erfolgter Trennung führt. Daraus ergibt sich eine Schrumpfung des Stoffs in Breit- und/oder in Längsrichtung.

Des Weiteren kann der Verbundvliesstoff nach Verfestigung einer Bindung oder Veredelung chemischer Art unterzogen werden, wie beispielsweise einer Anti-Pilling-Behandlung, einer Hydrophilisierung oder Hydrophobisierung, einer antistatischen Behandlung, einer Behandlung zur Verbesserung der Feuerfestigkeit und/oder zur Veränderung der taktilen Eigenschaften oder des Glanzes, einer Behandlung mechanischer Art wie Aufrauen, Sanforisieren, Schmirgeln oder einer Behandlung im Tumbler und/oder einer Behandlung zur Veränderung des Aussehens wie Färben oder Bedrucken.

Praktische Versuche haben ergeben, dass ein Verbundvliesstoff mit einer besonders homogenen Struktur erhalten werden kann, wenn das Vlies durch Beaufschlagung mit Temperatur und/oder Druck, vorzugsweise durch Kalandrieren bei einer Temperatur von 160 bis 220 °C, vorzugsweise 180-200 C und/oder einem Liniendruck von 20 bis 80 N/mm vorverfestigt wird.

Vorteilhafterweise wird der erfindungsgemäße Verbundvliesstoff zur Erhöhung seiner Abriebbeständigkeit noch einer Punktkalandierung unterzogen. Dazu wird der gesplittete und verfestigte Verbundvliesstoff durch beheizte Walzen geführt, von denen mindestens eine Walze Erhebungen aufweist, die zu einem punktuellen Verschmelzen der Filamente untereinander führen. Gemäß einer bevorzugten Ausführungsform der Erfindung werden die Verbundfilamente durch Spinnfärben eingefärbt.

Der erfindungsgemäße Mikrofaser-Verbundvliesstoff eignet sich hervorragend für die Herstellung der verschiedensten textilen Produkte, insbesondere von Produkten, die thermphysiologisch komfortabel und zusätzlich dekorativ sein sollen und sich zudem durch eine besonders hohe und dauerhafte Waschstabilität auszeichnen sollen. Hierunter fällt vor allem Wäsche, wie Tischwäsche, Bettwäsche, insbesondere Krankenhaus- und/oder Pflegeheimbettwäsche, Sanitärwäsche wie beispielsweise Bademäntel, Handtücher, Patientenhemden. Aufgrund seiner besonders dauerhaften Waschstabilität ist der erfindungsgemäße Mikrofaser-Verbundvliesstoff insbesondere zur Herstellung von Produkten geeignet, die zur Produktpalette von Mietwäschereien gehören.

Ein weiterer Gegenstand der vorliegenden Erfindung ist somit die Verwendung des erfindungsgemäßen Mikrofaser-Verbundvliesstoffs zur Herstellung von Mietwäsche. Bei dieser Verwendung zeigt sich der Vorteil der langen Haltbarkeit das Vliesstoffs besonders deutlich da sie de facto zu einer Verlängerung des Re-Investitionszyklusses führt. Die lange Haltbarkeit ermöglicht den Nutzern die Verwendung von Textilien, deren Rohstoffverbrauch aufgrund der sehr langen Nutzung gesenkt werden kann. Der erfindungsgemäße Vliesstoff stellt somit auch ein Produkt mit einer verbesserten Nachhaltigkeit dar.

Im Folgenden wird die Erfindung anhand mehrerer Beispiele näher erläutert.

### Beispiel 1 bis 12: Herstellung verschiedener Vliesstoffe

Es werden PIE 8, 16, 32-Lagen mit Flächengewichten (FG) von etwa 22g/m² und 43g/m² erstellt, die wie folgt zusammengesetzt werden.

**Tab. 2**

| **No.** | **Ziel-FG** [g/m²] | **Lagen-Komposition** 8 = 8Pie, 16 = 16Pie, 32 = 32Pie) | |
|---|---|---|---|
| (01) | 130 | 16 | |
| (02) | 130 | 8 | |
| (03) | 130 | 32 | |
| (04) | 130 | 16-8-32 | |
| (05) | 130 | 32-8-16 | |
| (06) | 130 | 32-8-32 | |
| (07) | 130 | 32-8-8-8-32 | |
| (08) | 130 | 32-16-16-16-32 | |
| (09) | 130 | 32-16-8-16-32 | |
| (10) | 130 | 8-32-32-32-8 | |
| (11) | 1 x 43 (129) | 1 x 32 | |
| (12) | 1 x 22 (110) | 1 x 32 | |

Dabei werden mit den Vliesstoffen 7, 8, 9 erfindungsgemäße Verbundvliesstoffe und mit den Vliesstoffen 1, 2, 3, 4, 5, 6, 10, 11, 12 Referenzvliesstoffe erhalten.

Zur Herstellung der Vliesstoffe werden in einem ersten Schritt Vliesstofflagen aus PIE 16, PIE 8 und PIE 32 segmentierten Bikomponenten-Filamenten hergestellt.

Im Folgenden wird exemplarisch die Herstellung von PIE 32 in einer Bikomponenten-Spinnvlies-Anlage beschrieben.

Es werden folgende Rohstoffe eingesetzt:

| Granulat | Anteile | |
|---|---|---|
| PES | PET INVISTA | 50 |
| Poly-Amid | PA6 BASF | 50 |
| Hydrophil (PET) | CLARIANT | 0,05 in PET |
| TiO2 | CLARIANT Renol weiss | 0,05 in PET |
| Antistatikum (PA6) | CLARIANT Hostastat | 0,05 in PA6 |

### Extruder:

PET, Zonen 1 - 7: 270-295 °C
PA6, Zonen 1 - 7: 260-275 °C

### Spinnpumpen:

| | | | |
|---|---|---|---|
| Volumen, Drehzahl, Durchsatz, PET: | 20cm3/U, | 9,1U/min, | 0,35 |
| g/L/min | | | |
| Volumen, Drehzahl, Durchsatz, PA6: | 6cm3/U, | 34,7U/min, | 0,35 |
| g/L/min | | | |
| Gesamtdurchsatz: | 0,7g/L/min | | |

### Düsen:

| | |
|---|---|
| Art, | PIE 32, |

### Pneumatische Vertreckung:

### Legung;

auf ein Ablageband, mit einer eingestellten Geschwindigkeit,
die ein Vlies-Flächengewicht von 22 bzw. 43 g/m² ergibt.

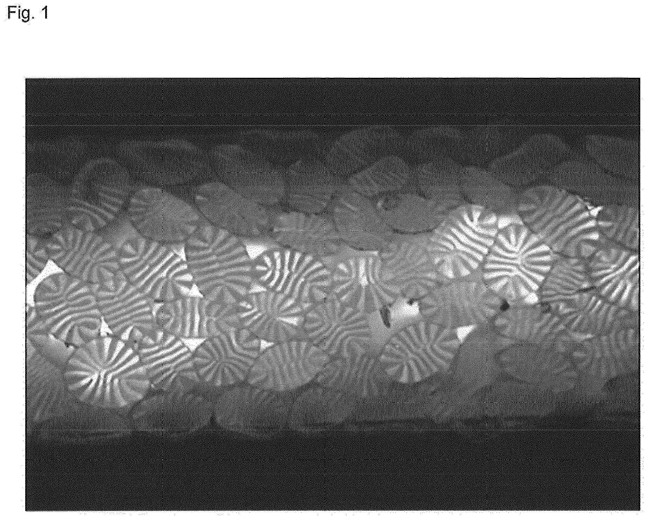

Vorverfestigung via Kalander, Stahlwalzen glatt/glatt:
Die Struktur der erhaltenen PIE 32 segmentierten Bikomponenten-Filamente ist in Figur 1 illustriert.

Zur Herstellung der Verbundvliese werden die Lagen in der gewünschten Reihenfolge aufeinander angeordnet. Anschließend wird die Splittung und Verfilzung der Einzel-Lagen zu einem Multifilamentverbundvliesstoff mittels Wasserstrahlverfestigung durchgeführt.

Da bei allen Komposite-Variationen das gleiche Zielgewicht anvisiert wird (ca. 130g/m²), wird eine feste Versuchsvorschrift zur Wasserstrahlverfestigung für alle Varianten gewählt, unabhängig davon ob es sich um 5x22g/m² oder 3x43g/m², PIE 8, 16, oder 32 handelt.

Die Wasserstrahlbedingungen werden wie folgt eingestellt:

| | Druck (bar) | Absaugung (mbar) |
|---|---|---|
| Vorverfestigung: | 0,4 | -728 |
| Düsenbalken 2: | 2,8 | - 74 |
| Düsenbalken 3: | 230 | -206 |
| Düsenbalken 4: | 0,1 | -206 |
| Düsenbalken 5: | 230 | -871 |
| Düsenbalken 3 und 5 liegen sich gegenüber. | | |
| Düsenstreifenlochdurchmesser: 130µm | | |
| Ablageband: 100 mesh | | |
| Materialtransport: 12 m/min | | |
| Wiederholung der Passage: 2x (d.h. gesamt 3 Passagen) | | |

Die Trocknungsbedingungen werden wie folgt eingestellt:
Es erfolgt eine Trocknung in einem Durchlufttrockner von etwa 4m Länge bei einer Lufttemperatur von 190°C und einer Bandgeschwindigkeit 12m/min.

Bei der Wasserstrahlverfestigung findet eine nahezu vollständige Splittung der Bikomponenten-Filamente in die jeweiligen Elementarfilamente statt. Gleichzeitig werden die feinen PIE- 32 Elementarfilamente der äußeren Lagen tief in den Vliesstoff transportiert und verschlingen sich sowohl untereinander als auch mit den dickeren PIE- 8 oder PIE- 16 Elementarfilamenten (Tentakeleffekt), was überraschenderweise zu einer besonders hohen Haltbarkeit der erfindungsgemäßen Verbundvliesstoffe 7, 8, 9 führt. Zusätzlich zeigen die erfindungsgemäßen Vliesstoffe aufgrund der äußeren Lage aus sehr feinen PIE- 32 Elementarfilamenten hervorragende Gebrauchseigenschaften, wie einen guten thermophysiologischen Komfort, eine angenehme Hautsensorik und Optik. Aufgrund der inneren Lage aus dickeren Filementen bietet er ferner eine hervorragende Wasseraufnahmekapazität und Weitereissfestigkeit.

### Beispiel 13: Prüfung verschiedener Parameter der Vliesstoffe

Den Prüfungen liegen folgende Normen zu Grunde:

| | | |
|---|---|---|
| FG | Flächengewicht (g/m²) | EN 965 |
| | Dicke (mm) | EN 964-1 |
| HZK | Höchstzugkraft (N/5cm) | EN 13934-1 |
| | Dehnung bei HZK (%) | EN 13934-1 |
| | Modul (N) | EN-13934-1 |
| | Porosität (µm) | ISO 2942/DIN 58355-2 |
| WRK | Weiterreißkraft (N) | EN 13937-2 |
| | Abrieb (Martindale, 9KPa) | EN 12947 |
| | Luftdurchlässigkeit (l/m²/s) | EN 9237 |
| | Pilling (Note) | DIN 53867 (angelehnt an) |
| | Wasseraufnahme (%) | angelehnt an DIN 53923 |
| | Industrie-Wäsche (hier 75°C) | in Anlehnung an DIN EN ISO 155797 (Zyklen bis Loch) |

Die Ergebnisse der Prüfungen sind in den folgenden Tabellen dargestellt:

### Textil-Physikalische Auswertung

**Tab. 3:**

| **N°** | | | **1** | **2** | **3** | **4** | **5** | **6*** | **7*** | **8*** | **9*** | **10** | **11** | **12** |
|---|---|---|---|---|---|---|---|---|---|---|---|---|---|---|
| **FG soll** | | **(g/m²)** | **130** | **130** | **130** | **130** | **130** | **130** | **130** | **130** | **130** | **130** | | |
| **Type de PIE** | | | **16** | **8** | **32** | **16-8-32** | **32-8-16** | **32-8-32** | **32-8-8-8-32** | **32/16/16/ 16/32** | **32/16/8/16/ 32** | **8/32/32/ 32/8** | **32/32/32** | **32/32/3 2/32/32** |
| FG gemessen | | (g/m²) | 151 | 149 | 128 | 136 | 142 | 139 | 118 | 119 | 119 | 129 | 39 | 27 |
| Dicke | | (mm) | 0,58 | 0,63 | 0,5 | 0,55 | 0,57 | 0,55 | 0,52 | 0,48 | 0,49 | 0,49 | 0,23 | 0,16 |

| **Dynamométrie à 20°C à 400mm/mn** | | | | | | | | | | | | | | |
|---|---|---|---|---|---|---|---|---|---|---|---|---|---|---|
| HZK | längs | (N/5cm) | 502 | 503 | 344 | 364 | 346 | 383 | 320 | 325 | 309 | 336 | 56 | 48,5 |
| | quer | (N) | 303 | 335 | 217 | 249 | 244 | 178 | 277 | 264 | 290 | 171 | 62 | 19 |
| Isotropie | | | 1,66 | 1,50 | 1,59 | 1,46 | 1,42 | 2,15 | 1,81 | 1,98 | 1,63 | 1,96 | 0,90 | 2,55 |
| Dehnung sbruch | längs | (%) | 65 | 65,5 | 58 | 55 | 48 | 60 | 53 | 53 | 54,5 | 56 | 27 | 29 |
| | quer | (%) | 89,5 | 93 | 78,5 | 85 | 83,5 | 73 | 69,5 | 71 | 77 | 77 | 54 | 56,5 |
| Modul 3 % | längs | (N) | 98 | 75 | 88 | 77 | 74 | 87 | 74 | 73 | 74 | 73 | 18 | 16 |
| | quer | (N) | 18 | 12 | 20 | 14 | 13 | 13 | 14 | 12 | 14 | 11 | 6 | 0,8 |
| Modul 5 % | längs | (N) | 128 | 104 | 108 | 101 | 99 | 110 | 94 | 95 | 92 | 96 | 24 | 21 |
| | quer | (N) | 26 | 19 | 28 | 20 | 19 | 18 | 20 | 17 | 20 | 15 | 8,2 | 1,1 |
| Modul 15 % | längs | (N) | 291 | 193 | 165 | 169 | 171 | 176 | 154 | 156 | 148 | 158 | 41 | 35 |
| | quer | (N) | 57 | 52 | 56 | 46 | 44 | 41 | 43 | 37 | 41 | 35 | 18 | 2,9 |
| Modul 40% | längs | (N) | 376 | 366 | 280 | 301 | 311 | 303 | 271 | 274 | 257 | 275 | - | - |
| | quer | (N) | 135 | 144 | 118 | 114 | 114 | 97 | 102 | 89 | 97 | 85 | 46 | 12 |
| Mittlere Porosität | | (µm) | - | - | 6,4 / 6,7 | - | - | - | - | - | - | - | - | - |
| Maximale Pore | | (µm) | - | - | 16,9/15,1 | - | - | - | - | - | - | - | - | - |
| WRK | SL | (N) | 14,9 | 12,7 | 5,2 | 7,9 | 8,5 | 13,0 | 11,9 | 7,1 | 7,9 | 6,8 | 2,4 | NA |
| vor Waschen | ST | (N) | 13,6 | 18,4 | 9,2 | 13,5 | 13,7 | 15,1 | 14,1 | 11,6 | 11,8 | 12,9 | 3,6 | NA |
| Martinda le 9KPa | | Lochbildung | 12000 | 18000 | 60000 | 10000 | 20000 | 40000 | 30000 | 55000 | 35000 | 20000 | 700 | 500 |
| Delamina tion | | (N/5cm) | NA | NA | NA | 26,3 | 27,9 | NA | NA | NA | NA | NA | NA | NA |
| Luftdurchlässigkeit 100Pa | | (1/m²/s) | - | - | 31,9 | - | - | - | - | - | - | - | - | - |
| Pilling | | rechts | 4,5 | 1 | 4,5 | 4 | 3,5 | 4,5 | 4 | 4,5 | 5 | 3 | 4,5 | 5 |

| Kochwäsche (95°C) | | | | | | | | | | | | | | |
|---|---|---|---|---|---|---|---|---|---|---|---|---|---|---|
| | | | **1** | **2** | **3** | **4** | **5** | **6** | **7** | **8** | **9** | **10** | **11** | **12** |
| Wasch-Schrumpf | längs | (%) | -2,2 | -1,7 | -2 | -2,3 | -2,2 | -3 | -1,2 | -1,8 | -1,6 | -2,5 | -2,8 | -3 |
| | quer | (%) | -0,8 | -0,8 | -0,3 | -0,5 | -0,2 | -0,2 | -0,8 | -0,4 | -0,4 | -0,5 | -1,5 | 0,4 |
| WRK | längs | (N) | 13,6 | 18,5 | 5,6 | 6,8 | 6,5 | 6,5 | 5,8 | 3,9 | 4,8 | 7,2 | 2,4 | NA |
| nach Waschen | quer | (N) | 16 | 19,4 | 9,5 | 10,4 | 11,9 | 11,7 | 10 | 7,5 | 11,5 | 12 | 4,1 | NA |

Bei Analyse der Ergebnisse aus Tab. 3 wird zuerst gefunden, dass bei allen Probanden bestehend aus PIE-32 ganz oder außen liegend besonders hohe Waschresistenzen zu verzeichnen sind. Dies ist überraschend, da nicht zu erwarten war, dass die feinen Filamente gute mechanische Festigkeit zeigen. Die Tücher, die vollständig aus PIE-32 bestehen, sind jedoch nur eingeschränkt gebrauchstüchtig, da sie unter anderem viel zu niedrige Weiterreisresistenzen aufweisen. Im Unterschied dazu zeichnen sich die erfindungsgemäßen Verbundvliesstoffe sowohl durch zufrieden stellende Weiterreiss- und Höchstzugkräfte als auch durch gute Waschresistenzen aus. Ferner kann der Tabelle entnommen werden, dass überraschenderweise bei den Referenzmustern die Abrasionsresistenz überproportional steigt mit feiner werdendem Titer

### Beispiel 14: Prüfung der Reinigungseigenschaften der Vliesstoffe

Die Vliesstoffe wurden im Hinblick auf ihre Wasseraufnahme und Wassergabe getestet. Außerdem wurden Sie dem Wachskreidetest unterzogen.

### Reinigungseigenschaften,

### Wasserhaushalt

| **Eigenschaft** | Einheit | N° 1 | N° 2 | N° 3 | N° 4 | N° 5 | N° 6 | N° 7 | N° 8 | N° 9 | N° 10 |
|---|---|---|---|---|---|---|---|---|---|---|---|
| **Wasseraufnahme** | Gew. % | 451 | 360 | 337 | 350 | 359 | 342 | 372 | 358 | 364 | 367 |
| **Wasserabgabe 1x Wringen** | Gew. % | 71 | 87 | 62 | 73 | 100 | 67 | 71 | 63 | 76 | 65 |
| **Wachskreide Test** | Wischzyklen | 22 | 25 | 25 | 29 | 23 | 27 | 32 | 30 | 34 | 17 |

### Beispiel 15: Prüfung der Dauerwaschergebnisse der Vliesstoffe:

Die Prüflinge wurden automatisch hintereinander weg gewaschen, nach je 50 Wäschen unterbrochen zur Beurteilung, und solange gewaschen, bis eine Lochbildung zu erkennen war. Dann wurde das Waschen abgebrochen:

| **Prüfling** | **Zyklen bis Lochbildung** |
|---|---|
| N° 1 | 400 |
| N° 2 | 250 |
| N° 3 | 800 |
| N° 4 | 400 |
| N° 5 | 450 |
| N° 6 | 500 |
| N° 7 | 500 |
| N° 8 | 600 |
| N° 9 | 550 |
| N° 10 | 350 |

### Beispiel 16: Visuelle Untersuchung der Vliesstoffe

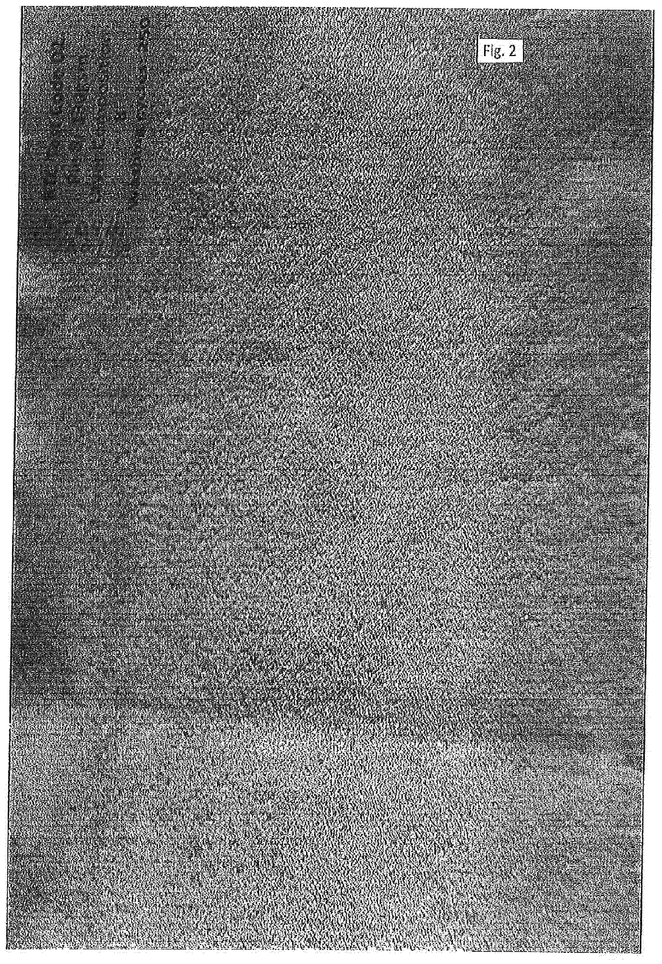

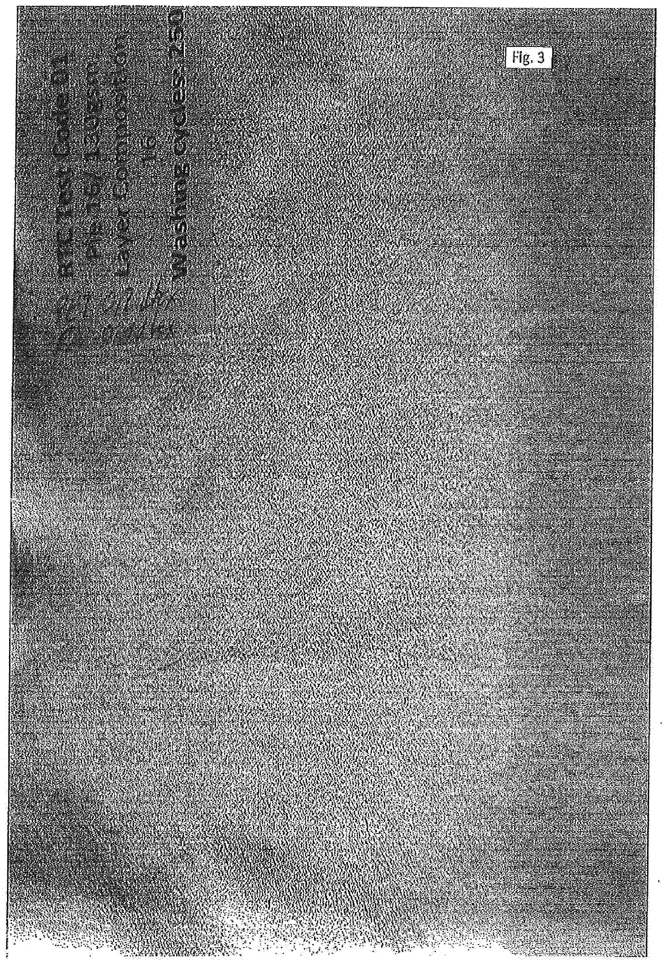

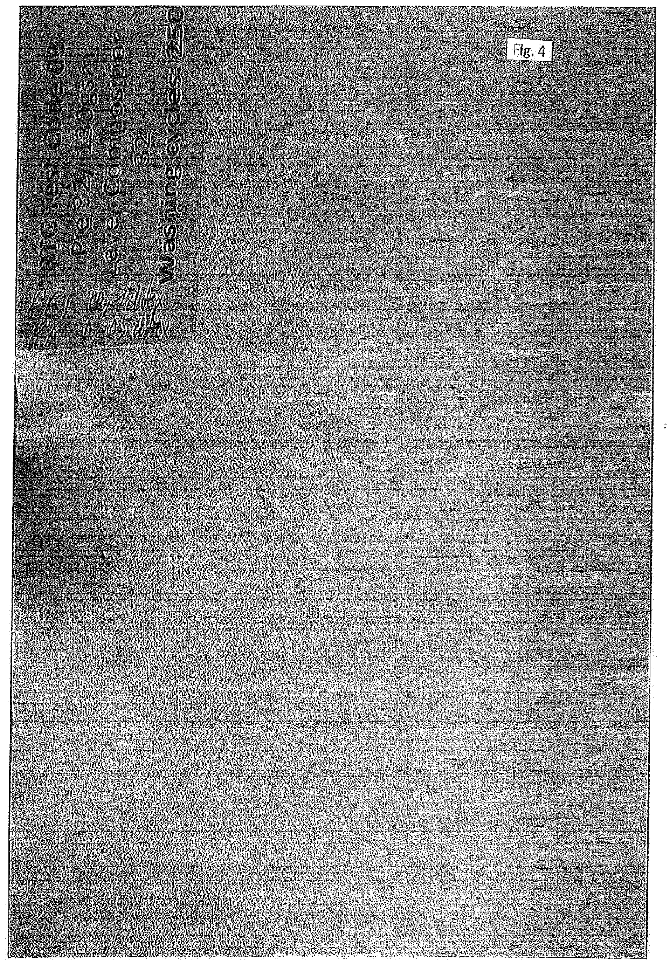

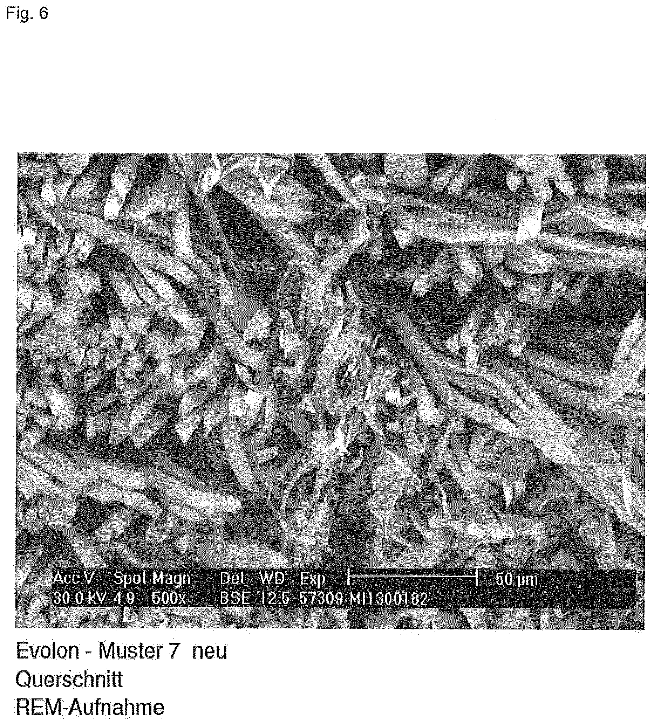

In den Figuren 2 bis 6 werden Fotografien der Oberflächen beispielhafter Vliesstoffe gezeigt.

In Figur 2 wird die Oberflächenstruktur des nicht erfindungsgemäßen Vliesstoffs Nr. 2 nach 250 Waschzyklen dargestellt. Es zeigt sich, dass die Oberfläche sehr rau ist und eine hohe Pillingnote aufweist.

In Figur 3 wird die Oberflächenstruktur des nicht erfindungsgemäßen Vliesstoffs Nr. 1 nach 250 Waschzyklen dargestellt. Die Oberfläche hat zwar ein verbessertes Erscheinungsbild verglichen mit Vliesstoff Nr. 2 ist aber immer noch rau und weist eine hohe Pillingnote auf.

In Figur 4 wird die Oberflächenstruktur des nicht erfindungsgemäßen Vliesstoffs Nr. 3 nach 250 Waschzyklen dargestellt. Die Oberfläche hat ein wesentlich verbessertes Erscheinungsbild verglichen mit Vliesstoff Nr. 2. Wie bereits oben erwähnt, ist der vollständig aus PIE-32 bestehende Vliesstoff jedoch nur eingeschränkt gebrauchstüchtig, da er unter anderem eine viel zu niedrige Weiterreisresistenz aufweist.

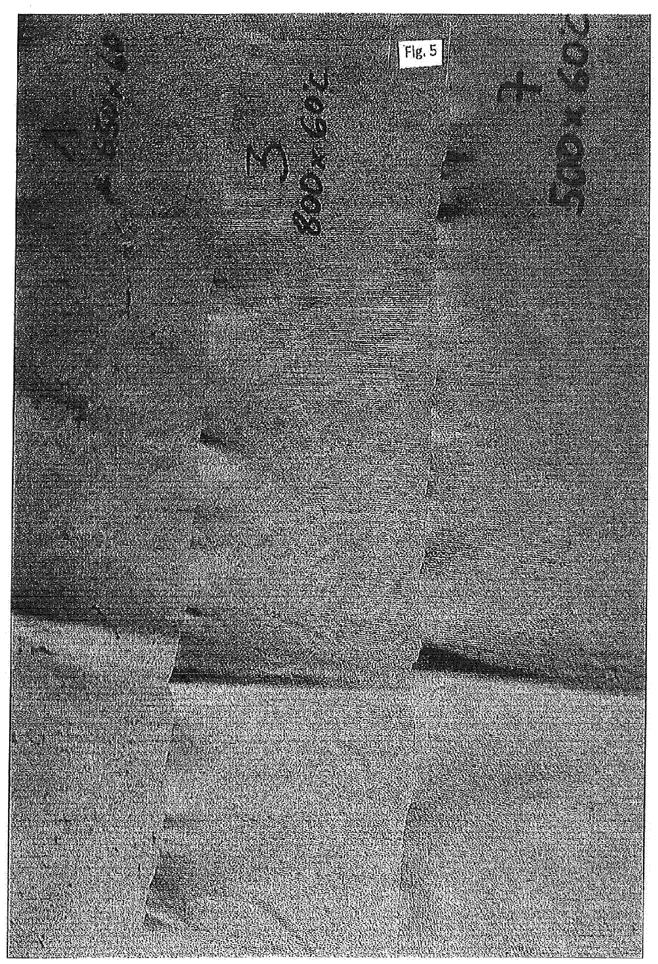

In Figur 5 werden die Oberflächenstrukturen des erfindungsgemäßen Vliesstoffs Nr. 7 nach 500 Waschzyklen mit den nicht erfindungsgemäßen Vliesstoffen 1 (nach 650 Waschzyklen) und 3 (nach 800 Waschzyklen) verglichen. Es zeigt sich, dass die Oberfläche des erfindungsgemäßen Vliesstoffs Nr. 7 ein ähnlich gutes Erscheinungsbild wie der nur aus PIE-32 bestehende Vliesstoff Nr. 3 hat. Darüber hinaus zeichnet er sich durch hervorragende Gebrauchseigenschaften, wie beispielsweise ein gutes Wassermanagement, eine hohe weiter Reißkraft, eine gute Pilingnote und gute Reinigungseigenschaften aus. Im Vergleich dazu weist der nicht erfindungsgemäße Vliesstoff 1 eine starke Lochbildung auf.

In Figur 6 wird ein Querschnitt des erfindungsgemäßen Vliesstoffs Nr. 7 dargestellt. Man erkennt deutlich den so genannten "Tentakeleffekt", bei dem die feinen PIE-32 Elemente durch die Wasserstrahlverfestigung tief in die Lagen aus gröberen Filamente hineingetragen wurden.

## Patentansprüche

1. Mikrofaser-Verbundvliesstoff umfassend eine erste und eine zweite Faserkomponente, die in Form alternierender Lagen angeordnet sind, wobei
- mindestens eine erste Lage A die erste Faserkomponente in Form schmelzgesponnener und zu einem Vlies abgelegter Verbundfilamente umfasst, die zumindest teilweise zu Elementar-Filamenten mit einem mittleren Titer von weniger als 0,1 dtex, vorzugsweise zwischen 0,03 dtex und 0,06 dtex gesplittet und verfestigt sind,
- mindestens eine Lage B auf der ersten Lage A angeordnet ist, wobei die Lage B die zweite Faserkomponente in Form von zu einem Vlies abgelegten und verfestigten Fasern mit einem mittleren Titer von 0,1 bis 3 dtex umfasst,
- mindestens eine zweite Lage A auf der Lage B angeordnet ist, **dadurch gekennzeichnet, dass** der Mikrofaser-Verbundvliesstoff folgenden Schichtaufbau A(BA)ₙBA, mit n = 1 bis 20 aufweist.

2. Mikrofaser-Verbundvliesstoff nach Anspruch 1, **dadurch gekennzeichnet, dass** die Verbundfilamente der ersten und/oder zweiten Faserkomponente einen Querschnitt mit orangenartiger oder auch "Pie" genannter Multisegment-Struktur aufweisen.

3. Mikrofaser-Verbundvliesstoff nach einem oder mehreren der vorangehenden Ansprüche, **dadurch gekennzeichnet, dass** die Pie-Anordnung der Fasern der ersten Faserkomponente 24, 32, 48 oder 64 Segmente aufweist.

4. Mikrofaser-Verbundvliesstoff nach einem oder mehreren der vorangehenden Ansprüche, **dadurch gekennzeichnet, dass** die Verbundfilamente unterschiedliche Filamente umfassen, die mindestens zwei inkompatible thermoplastische Polymere enthalten.

5. Mikrofaser-Verbundvliesstoff nach einem oder mehreren der vorangehenden Ansprüche, **dadurch gekennzeichnet, dass** die zweite Faserkomponente Verbundfilamente umfasst, welche vorzugsweise aus 2, 4, 8, 16 Elementar-Filamenten und besonders bevorzugt aus 8 Elementar-Filamenten bestehen.

6. Mikrofaser-Verbundvliesstoff nach einem oder mehreren der vorangehenden Ansprüche, **dadurch gekennzeichnet, dass** das Verhältnis des mittleren Filamenttiters der Filamente der zweiten Faserkomponente zum mittleren Filamenttiter der ersten Faserkomponente von 10 bis 30 beträgt.

7. Mikrofaser-Verbundvliesstoff nach einem oder mehreren der vorangehenden Ansprüche, **dadurch gekennzeichnet, dass** der Anteil der Filamente der ersten Faserkomponente 20-60 Gew.%, vorzugsweise 30-50 Gew.%, und insbesondere 35-45 Gew.%, jeweils bezogen auf das Gesamtgewicht des Vliesstoffs beträgt.

8. Mikrofaser-Verbundvliesstoff nach einem oder mehreren der vorangehenden Ansprüche, **dadurch gekennzeichnet, dass** der Anteil der Filamente der zweiten Faserkomponente 40-80 Gew.%, vorzugsweise 50-70 Gew.%, jeweils bezogen auf das Gesamtgewicht des Vliesstoffs beträgt.

9. Mikrofaser-Verbundvliesstoff nach einem oder mehreren der vorangehenden Ansprüche, **dadurch gekennzeichnet, dass** der Verbundvliesstoff eine Oberfläche aufweist, die von den Elementar-Filamenten der ersten Faserkomponente gebildet wird.

10. Mikrofaser-Verbundvliesstoff nach einem oder mehreren der vorangehenden Ansprüche **gekennzeichnet durch** eine Lagenfolge A(BA)ₙBA mit n = 1 bis 15, wobei die Lagen A zumindest teilweise gesplittete Pie 32-Filamente und die Lagen B zumindest teilweise gesplittete Pie 8-Filamente enthalten und wobei der Titer der Elementarfilamente der Pie 32-Filamente weniger als 0,1 dtex, beträgt und der Titer der Elementarfilamente der Pie 8-Filamente 0,1-3 dtex beträgt.

11. Mikrofaser-Verbundvliesstoff nach einem oder mehreren der vorangehenden Ansprüche, **dadurch gekennzeichnet dass** zwischen den Lagen A und B mindestens eine weitere Lage, vorzugsweise ausgestaltet als Verstärkungslage, beispielsweise als Scrim angeordnet ist,

12. Mikrofaser-Verbundvliesstoff nach einem oder mehreren der vorangehenden Ansprüche **gekennzeichnet durch** einen symmetrischen Schichtaufbau.

13. Verfahren zur Herstellung eines Mikrofaser-Verbundvliesstoffs nach einem oder mehreren der vorangehenden Ansprüche, umfassend folgende Schritte:
- es werden mindestens drei Faserlagen A umfassend Filamente der ersten Faserkomponente und mindestens zwei Faserlagen B umfassend Filamente der zweiten Faserkomponente separat ersponnen, zu einem Vlies abgelegt und gegebenenfalls, beispielsweise durch Vernadelung, vorverfestigt;
- die Faserlagen A und B werden alternierend aufeinander angeordnet, wobei die äußeren Lagen durch die Faserlagen A gebildet werden;
- der Lagenverbund wird anschließend einer Hydrofluidbehandlung unterzogen, wobei eine Splittung der ersten und gegebenenfalls auch der zweiten Faserkomponente stattfindet und wobei die Lagen A und B sowohl in sich als auch untereinander verfestigt werden.

14. Verwendung eines Mikrofaser-Verbundvliesstoffs nach einem oder mehreren der vorangehenden Ansprüche zur Herstellung von Tischwäsche, Bettwäsche, insbesondere Krankenhaus- und/oder Pflegeheimbettwäsche, Sanitärwäsche, wie beispielsweise Bademäntel, Handtücher, Patientenhemden.

15. Verwendung nach Anspruch 14 zur Herstellung von Mietwäsche.

## Claims

1. Microfiber composite nonwoven comprising a first and a second fibrous component arranged in the form of alternating plies, wherein
- at least one first ply A comprises the first fibrous component in the form of melt-spun composite filaments laid down to form a web, some or all of which have been split into elemental filaments having an average linear density of less than 0.1 dtex, preferably between 0.03 dtex and 0.06 dtex, and consolidated,
- at least one ply B is arranged on the first ply A, wherein the ply B comprises the second fibrous component in the form of fibers having an average linear density of 0.1 to 3 dtex which have been laid down to form a web and consolidated,
- at least one second ply A is arranged on the ply B, **characterized in that** the microfiber composite nonwoven has a layered construction A(BA)ₙBA where n = 1 to 20.

2. Microfiber composite nonwoven according to Claim 1, **characterized in that** the composite filaments of the first and/or second fibrous components have a cross section of orange-type or pie multisegmented structure.

3. Microfiber composite nonwoven according to one or more of the preceding claims, **characterized in that** the pie arrangement of the fibers of the first fibrous component includes 24, 32, 48 or 64 segments.

4. Microfiber composite nonwoven according to one or more of the preceding claims, **characterized in that** the composite filaments comprise different filaments comprising two or more incompatible thermoplastic polymers.

5. Microfiber composite nonwoven according to one or more of the preceding claims, **characterized in that** the second fibrous component comprises composite filaments preferably consisting of 2, 4, 8, 16 elemental filaments and more preferably consisting of 8 elemental filaments.

6. Microfiber composite nonwoven according to one or more of the preceding claims, **characterized in that** the ratio of the average filament linear density of the filaments of the second fibrous component to the average filament linear density of the first fibrous component is in the range from 10 to 30.

7. Microfiber composite nonwoven according to one or more of the preceding claims, **characterized in that** the proportion of the filaments of the first fibrous component is 20-60 wt%, preferably 30-50 wt% and especially 35-45 wt%, all based on the overall weight of the nonwoven.

8. Microfiber composite nonwoven according to one or more of the preceding claims, **characterized in that** the proportion of the filaments of the second fibrous component is 40-80 wt%, preferably 50-70 wt%, all based on the overall weight of the nonwoven.

9. Microfiber composite nonwoven according to one or more of the preceding claims, **characterized in that** the composite nonwoven includes a surface formed by the elemental filaments of the first fibrous component.

10. Microfiber composite nonwoven according to one or more of the preceding claims, **characterized by** a ply sequence A(BA)ₙBA where n = 1 to 15, wherein the plies A comprise at least partially split pie 32 filaments and the plies B comprise at least partially split pie 8 filaments and wherein the linear density of the elemental filaments of the pie 32 filaments is less than 0.1 dtex and the linear density of the elemental filaments of the pie 8 filaments is 0.1-3 dtex.

11. Microfiber composite nonwoven according to one or more of the preceding claims, **characterized in that** between the plies A and B there is arranged at least one further ply, preferably configured as a reinforcing ply, for example as a scrim.

12. Microfiber composite nonwoven according to one or more of the preceding claims, **characterized by** a symmetrical layered construction.

13. Method of forming a microfiber composite nonwoven according to one or more of the preceding claims, said method comprising the following steps:
- three or more fiberplies A comprising filaments of the first fibrous component and two or more fiberplies B comprising filaments of the second fibrous component are separately spun, laid down to form a web and optionally, by needling for example, preconsolidated;
- the fiberplies A and B are alternatingly arranged on top of each other, subject to the proviso that the outer plies are formed by the fiberplies A;
- the ply assembly is subsequently subjected to a hydrofluid treatment to split the first and optionally also the second fibrous component and to consolidate the plies A and B both within and between.

14. Use of a microfiber composite nonwoven according to one or more of the preceding claims in the manufacture of table linen, bed linen, in particular hospital and/or care home bed linen, sanitary linen, for example bathrobes, hand towels, patient gowns.

15. Use according to Claim 14 in the manufacture of contract linen.

## Revendications

1. Non-tissé composite de microfibres, comprenant un premier et un deuxième composant fibreux, qui sont agencés sous la forme de couches alternées,
- au moins une première couche A comprenant le premier composant fibreux sous la forme de filaments composites filés par fusion et déposés pour former un non-tissé, qui sont au moins partiellement divisés en filaments élémentaires ayant un titre moyen de moins de 0,1 dtex, de préférence compris entre 0,03 dtex et 0,06 dtex, et consolidés,
- au moins une couche B étant agencée sur la première couche A, la couche B comprenant le deuxième composant fibreux sous la forme de fibres déposées en un non-tissé et consolidées, ayant un titre moyen de 0,1 à 3 dtex,
- au moins une deuxième couche A étant agencée sur la couche B,
**caractérisé en ce que** le non-tissé composite de microfibres présente la structure de couches suivante : A(BA)ₙBA, avec n = 1 à 20.

2. Non-tissé composite de microfibres selon la revendication 1, **caractérisé en ce que** les filaments composites du premier et/ou du deuxième composant fibreux présentent une section transversale ayant une structure à plusieurs segments en forme d'orange ou également dite « en tarte ».

3. Non-tissé composite de microfibres selon une ou plusieurs des revendications précédentes, **caractérisé en ce que** l'agencement en tarte des fibres du premier composant fibreux comprend 24, 32, 48 ou 64 segments.

4. Non-tissé composite de microfibres selon une ou plusieurs des revendications précédentes, **caractérisé en ce que** les filaments composites comprennent différents filaments, qui contiennent au moins deux polymères thermoplastiques incompatibles.

5. Non-tissé composite de microfibres selon une ou plusieurs des revendications précédentes, **caractérisé en ce que** le deuxième composant fibreux comprend des filaments composites, qui sont de préférence constitués par 2, 4, 8, 16 filaments élémentaires et de manière particulièrement préférée par 8 filaments élémentaires.

6. Non-tissé composite de microfibres selon une ou plusieurs des revendications précédentes, **caractérisé en ce que** le rapport entre le titre de filament moyen des filaments du deuxième composant fibreux et le titre de filament moyen du premier composant fibreux est de 10 à 30.

7. Non-tissé composite de microfibres selon une ou plusieurs des revendications précédentes, **caractérisé en ce que** la proportion des filaments du premier composant fibreux est de 20 à 60 % en poids, de préférence de 30 à 50 % en poids et notamment de 35 à 45 % en poids, à chaque fois par rapport au poids total du non-tissé.

8. Non-tissé composite de microfibres selon une ou plusieurs des revendications précédentes, **caractérisé en ce que** la proportion des filaments du deuxième composant fibreux est de 40 à 80 % en poids, de préférence de 50 à 70 % en poids, à chaque fois par rapport au poids total du non-tissé.

9. Non-tissé composite de microfibres selon une ou plusieurs des revendications précédentes, **caractérisé en ce que** le non-tissé composite présente une surface qui est formée par les filaments élémentaires du premier composant fibreux.

10. Non-tissé composite de microfibres selon une ou plusieurs des revendications précédentes, **caractérisé par** une succession de couches A(BA)ₙBA avec n = 1 à 15, les couches A contenant des filaments en tarte à 32 segments au moins partiellement divisés et les couches B contenant des filaments en tarte à 8 segments au moins partiellement divisés, et le titre des filaments élémentaires des filaments en tarte à 32 segments est inférieur à 0,1 dtex, et le titre des filaments élémentaires des filaments en tarte à 8 segments est de 0,1 à 3 dtex.

11. Non-tissé composite de microfibres selon une ou plusieurs des revendications précédentes, **caractérisé en ce qu'**au moins une couche supplémentaire, de préférence configurée sous la forme d'une couche de renforcement, par exemple sous la forme d'un canevas, est agencée entre les couches A et B.

12. Non-tissé composite de microfibres selon une ou plusieurs des revendications précédentes, **caractérisé par** une structure de couches symétrique.

13. Procédé de fabrication d'un non-tissé composite de microfibres selon une ou plusieurs des revendications précédentes, comprenant les étapes suivantes :
- au moins trois couches de fibres A comprenant des filaments du premier composant fibreux et au moins deux couches de fibres B comprenant des filaments du deuxième composant fibreux sont filées séparément, déposées pour former un non-tissé et éventuellement pré-consolidées, par exemple par aiguilletage ;
- les couches de fibres A et B sont agencées en alternance les unes sur les autres, les couches extérieures étant formées par les couches de fibres A ;
- le composite de couches est ensuite soumis à un traitement hydrofluide, une division du premier et éventuellement également du deuxième composant fibreux ayant lieu, et les couches A et B étant consolidées aussi bien en elles-mêmes qu'entre elles.

14. Utilisation d'un non-tissé composite de microfibres selon une ou plusieurs des revendications précédentes pour la fabrication de linges de table, de linges de lit, notamment de linges de lit d'hôpital et/ou de maisons de soin, de linges sanitaires, tels que par exemple de peignoirs, de serviettes, de chemises pour patients.

15. Utilisation selon la revendication 14 pour la fabrication de linges de location.
